# EUROPEAN PATENT SPECIFICATION

(11) **EP 0 633 849 B1**
(45) Date of publication and mention of the grant of the patent: **27.05.1998**
(21) Application number: 93906777.3
(22) Date of filing: 31.03.1993
(51) Int. Cl.: B60T 8/18, B60G 17/052, B60G 11/46

(54) **IMPROVEMENTS IN AND RELATING TO AUXILIARY SUSPENSION SYSTEMS**
VERBESSERUNGEN ANHILFSAUFHÄNGUNGSSYSTEMEN
PERFECTIONNEMENTS CONCERNANT DES SUSPENSIONS AUXILIAIRES

(30) Priority: 07.04.1992 IE 350791
(43) Date of publication of application: 18.01.1995
(73) Proprietor: DRIVERITE LIMITED, Dublin 2 (IE)
(72) Inventor: NASH, Harold, Dublin 2 (IE); RONAN, Brendan, Clane, County Kildare (IE); CARSON, Patrick, Dublin 4 (IE); GILES, John, Dublin 3 (IE)
(74) Representative: O'Brien, John Augustine
(86) International application number: IE9300019
(87) International publication number: WO9319959

(56) References cited:
- EP-A- 0 399 314
- DE-A- 1 430 511
- DE-A- 1 946 446
- DE-A- 2 234 469
- DE-A- 2 443 506
- DE-B- 1 145 501
- DE-B- 1 196 522
- GB-A- 836 100
- GB-A- 2 184 803
- US-A- 3 393 946
- PATENT ABSTRACTS OF JAPAN vol. 8, no. 201 (M-325)(1638) 14 September 1984 & JP,A,59 089 257 ( TOYOTA ) 23 May 1984
- REVUE TECHNIQUE AUTOMOBILE vol. 16, July 1961, page 54 'L'EVOLUTION DES FREINS. LE PROBLEME DE LA PREDOMINANCE'

## Description

The invention relates to auxiliary suspension systems for vehicles, particularly light commercial vehicles and the like.

More particularly the invention relates to a vehicle having an in situ suspension system of the type comprising:
a suspension unit (S) for each wheel at least on the rear axle of the vehicle;
the vehicle having an hydraulically operated braking system;
a load compensating valve means (F) for controlling the flow of braking fluid and hence the braking force applied in accordance with load; and
a load sensing and modulating means (A,C) on the axle (B) having a load sensor mechanically operated means between the load sensing and modulating means and the load compensating valve means (F) to operate the valve,
and an auxiliary suspension unit comprising a prepressurised pneumatically operated bellows suspension unit for at least the rear axle (B) of the vehicle.

A vehicle braking system is designed to stop a fully laden vehicle travelling at a given speed within a specified distance. Consequently, some braking systems are overdesigned for a vehicle when it is less than fully laden. This can create an undesirable situation when the load variation applies to one axle of the vehicle but not to the other. This is usually the case with commercial vehicles where the weight carried by the front axle is usually relative constant whereas the weight carried by the back axle is considerably dependent on the condition of lading. Thus, when a commercial vehicle is unladen the braking system is not as efficient as when the vehicle is laden.

In an effort to overcome this difficulty it is known to provide load sensing and modulating means to modulate the braking force applied to the axles of commercial vehicles depending on the lading conditions of the vehicle. This gives a graduated brake output depending on the laden conditions of the vehicle. Generally, such load sensing and modulating means are used in association with vehicles equipped with conventional steel springs, usually steel leaf springs. Typically, a load sensing valve for use with steel springs is fixed to the vehicle chassis at a location roughly above the back axle. The valve has an inlet from the brake pedal of the vehicle and an outlet which leads to the pneumatic or hydraulic brake actuators of the vehicle. In one case the load sensing valve is operated by a torsion bar which is rigidly fixed to the axle by means of a connecting link. The other end of the torsion bar acts against the stem of the load sensing valve to modulate the flow of braking fluid, and hence the braking force generated, to the laden conditions of the vehicle. When the vehicle is fully laden the torsion bar is pushed upwards relative to the vehicle chassis to fully open the valve so that full braking pressure is allowed to pass through the load sensing valve unchecked for maximum braking. When the vehicle is unladen, however, the body of the vehicle rises up on the suspension springs, pulling the torsion bar downwards relative to the chassis and partially closing the load sensing valve to reduce the braking pressure applied to the brakes.

In the case of light commercial vehicles such as small vans, ambulances, campers, mini coaches, four-wheel drive vehicles and the like, it is often desirable to provide an auxiliary suspension system in addition to the conventional steel spring suspension system of the vehicle. The auxiliary suspension system often comprises air bags for one or both of the vehicle axles. The air bags improve the handling and comfort of the vehicle throughout the loading range. However, there is a potential difficulty with such auxiliary air bag suspensions in that as the air bags are inflated the loading of the vehicle is shared between the air bag auxiliary suspension system and the conventional steel spring suspension system. The load sensing and modulating arrangement, however, only detects a partially laden condition due to the air bags applying additional lift and load bearing support to the vehicle over and above the existing steel spring suspension. Consequently, the brake load sensing valve gives a less than normal brake fluid output to the brakes. Because of this error it is generally not possible to fit such an auxiliary air bag suspension system to this type of vehicle and still comply with the requirements of the regulatory authorities governing vehicle safety.

There is therefore a need for an improved suspension system which will overcome this difficulty.

EP-A-0,399,314 describes a vehicle suspension system with load-dependent control of braking. The suspension system is a fixed combined system of mechanical springs and air bellows. A braking force controller controls the braking pressure.

JP-A-59089257.1 describes a system for correcting load sensing control in accordance with load.

US-A-3,393,946 describes a valve which is used to correct the braking pressure applied as a function of the load applied to a vehicle.

The invention is characterised in that there is provided:
a pneumatic actuator pneumatically connected to the auxiliary suspension units to form a closed system therewith always having the same air pressure; and
a mechanical connection means mounted between the pneumatic actuator and the load sensor mechanical operating means to act against the sensor mechanical operating means to nullify the action of the auxiliary suspension unit in reducing the sensed load by the load sensing and modulating means, the actuator comprising an auxiliary bellows having an actuating arm forming said mechanical connection means and being engageable with an actuating stem of the load compensating valve means, the actuating arm of the auxiliary bellows being arranged substantially co-axially with the actuating stem of the load compensating valve.

In a particularly preferred arrangement a shielding boot is provided over the connection between the auxiliary bellows and the load compensating valve.

In a particularly preferred embodiment of the invention, the auxiliary bellows is supported on a bracket which in turn supports the load sensing valve.

In another aspect, the invention is characterised in that the actuator comprises an actuating ram which acts on the load sensing valve means, the actuating ram including a plunger which moves an arm associated with the load sensing valve means, an extension arm being interposed between the load sensing valve arm and the plunger of the actuating ram, and the actuating ram being mounted to the vehicle chassis.

The invention will be more clearly understood from the following description thereof given by way of example only with reference to the accompanying drawings, in which:-
Fig. 1 is a diagrammatic view illustrating the operation of a load compensating valve of a conventional vehicle suspension system;
Fig. 2 is a schematic view of an auxiliary suspension system according to the invention;
Fig. 3 is a perspective view of the auxiliary suspension system in use with no compensating means in position;
Fig. 4 is a perspective view similar to Fig. 3 with the compensating means in position;
Fig. 5 is an elevational view of the auxiliary suspension system, in use;
Fig. 6 is a plan view of the auxiliary suspension system, in use;
Fig. 7 is a front view of a compensating means of the auxiliary suspension system;
Fig. 8 is a more detailed front view of the compensating means and load sensing valve;
Fig. 9 is a side view of the compensating means and load sensing valve;
Fig. 10 is a front, partially cross sectional view of a detail of the compensating means and load sensing valve;
Fig. 11 is a side view of the detail of Fig. 10;
Fig. 12 is a graph illustrating the braking pressure applied dependent on the laden conditions of the vehicle;
Fig. 13 is an elevational view of another suspension system;
Fig. 14 is an elevational view similar to Fig. 13 with another auxiliary suspension system according to the invention in use;
Fig. 15 is a perspective view of the auxiliary suspension system of Fig. 14 in use, and
Fig. 16 is a graph illustrating the braking pressure applied dependent on the laden conditions of the vehicle.

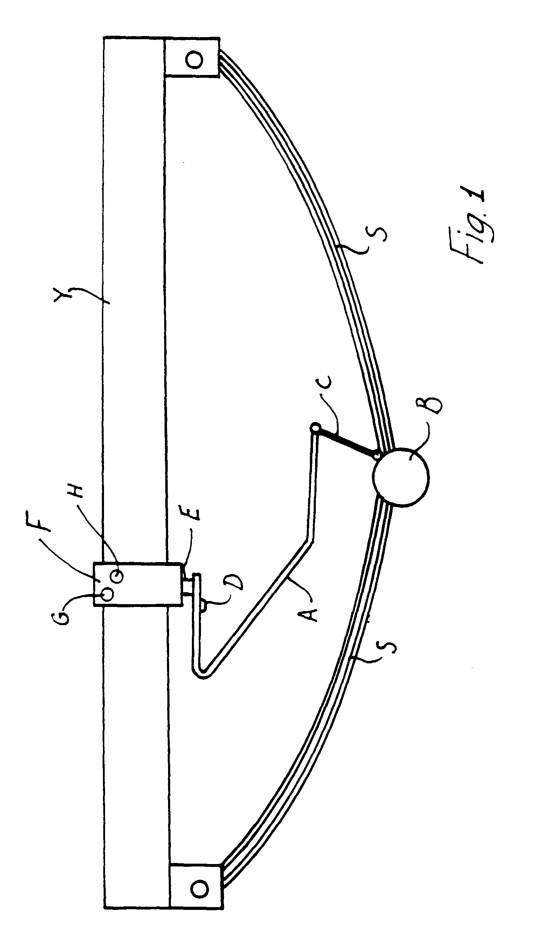

Referring to the drawings and initially to Figs. 1 to 3 a conventional load sensing and modulating means for modulating the braking forces applied to the brakes of a vehicle in accordance with load of a commercial vehicle is illustrated. The vehicle in this case has a suspension system of the type used in a Fiat Ducato. The vehicle has a conventional leaf spring suspension S. The load sensing and modulating means comprises a torsion bar A which is rigidly fixed by means of a connecting link C to the rear axle B of the vehicle. The torsion bar A is pivotally mounted about a pivot point D and acts against the stem E of a load sensing valve F mounted on a vehicle chassis Y. The load sensing valve F has an inlet connection G, to which braking fluid is applied along line Lₚ on operation of the brake pedal of the vehicle, and an outlet connection H along line L_{B} to pneumatic or hydraulic brake actuators of the vehicle. The degree of modulation of the load sensing valve F with load is set by means of a setting arm (not shown) which may be moved to any position through an arc by the connecting link C which is attached at it's upper end to the end of the setting arm and at it's lower end to the rear axle B of the vehicle.

It will be apparent that when the vehicle is fully laden, the torsion bar A will be pushed upwards relative to the vehicle chassis Y and any braking pressure is allowed to pass directly through the load sensing valve F unchecked. When the vehicle is unladen, the body of the vehicle will rise on the suspension springs S pulling the torsion bar A downward relative to the chassis Y and causing any braking pressure applied to the inlet connection G of the load sensing valve F to be modulated before it passes to the brake actuators. As the weight is increased, the torsion bar pivots at the pivot point D and acts against the stem E of the valve F opening the valve F further and allowing more braking fluid to flow to the brakes to increase the braking pressure.

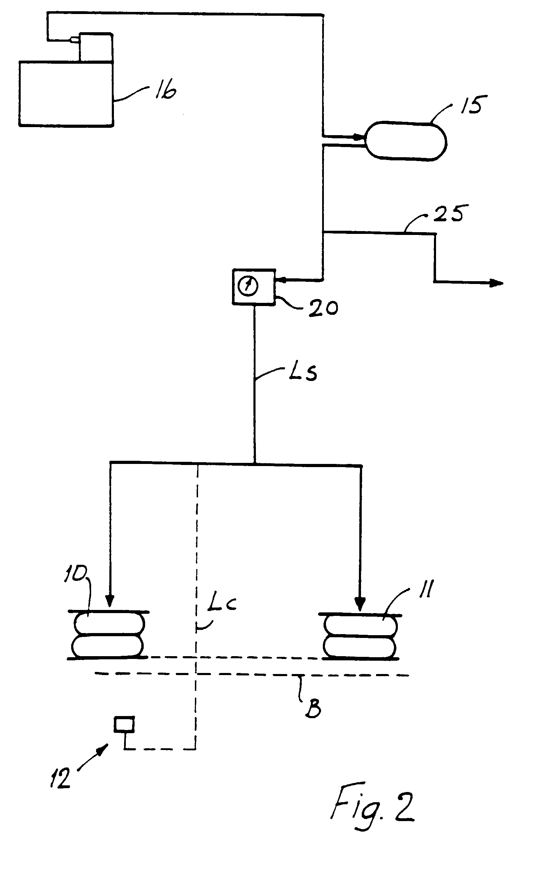

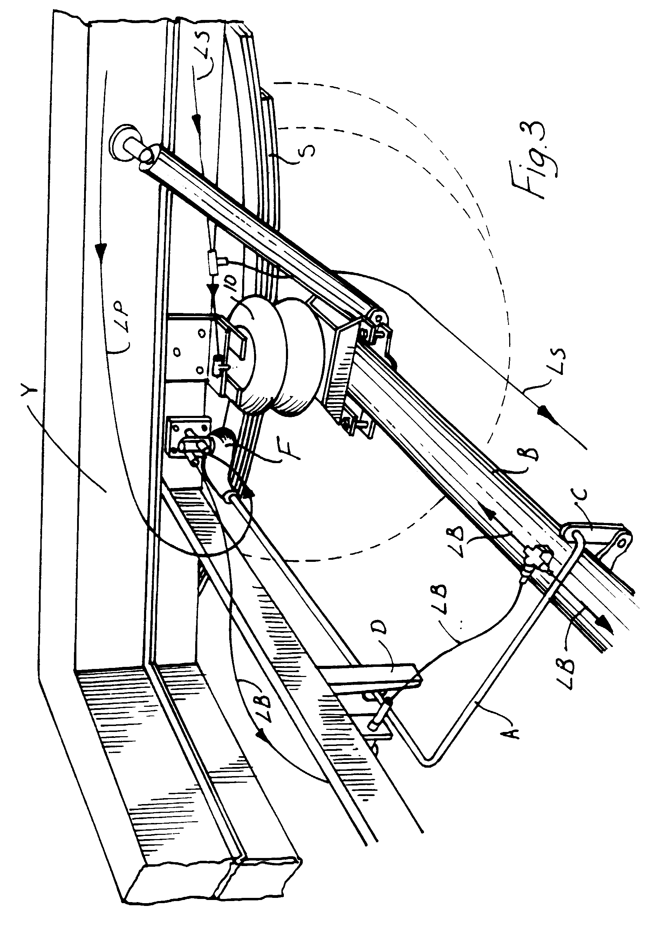

Referring to Figs. 2 and 3, there is illustrated an auxiliary suspension system which may be retro-fitted to a conventional commercial vehicle having a leaf spring suspension system S and a load sensing and modulating means as described above.

The auxiliary suspension system includes an auxiliary suspension unit, in this case, air operated bellows or air bags 10, 11 for the wheels of the rear axle B of the vehicle. Compressed air for operating the bellows 10, 11 is supplied from an air reservoir 15 which is fed from a compressor 16. Air lines deliver compressed air from the air reservoir 15 to the bellows 10, 11 along lines Lₛ through an air control panel 19 and gauge 20. In this case the air system includes a spur air line 25 which may be used for auxiliary purposes such as for inflation of tyres.

Referring to Fig. 3 a vehicle suspension system with an auxiliary air bellows 10 in position is illustrated. In this arrangement the load sensing valve F does not operate correctly. This is because when the bellows 10 are inflated the vehicle chassis Y rises relative to the axle B. The torsion bar A will be pushed downwardly relative to the chassis Y behaving as if the vehicle is unladen. Thus, the load sensing valve F will not modulate the braking pressure.

According to the invention, compensating means indicated by interrupted lines in Fig. 2 and generally by the reference numeral 12 operate the load sensing valve F in response to the operation of the auxiliary air bellows suspension units 10, 11.

It will be noted that air is delivered to the load compensating means 12 along a spur line L_{c} from the same air line Lₛ which is used to supply air to the bellows 10, 11. In this way, the air supplied to the bellows 10, 11 is mimicked by that supplied to the compensating means 12. Thus, the compensating means 12 mimics the operation of the bellows 10, 11 in substantially all conditions of use.

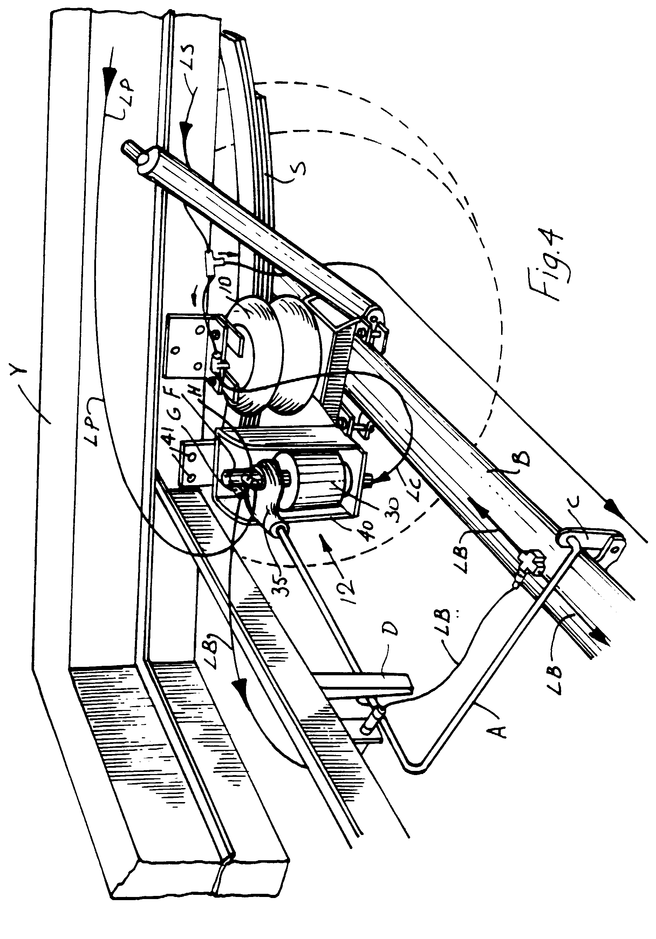

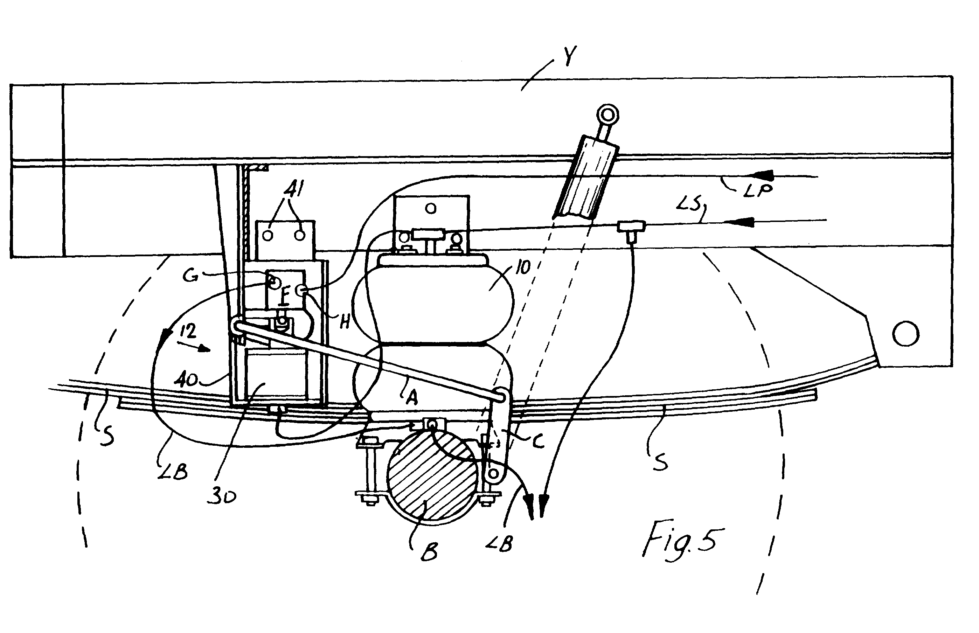

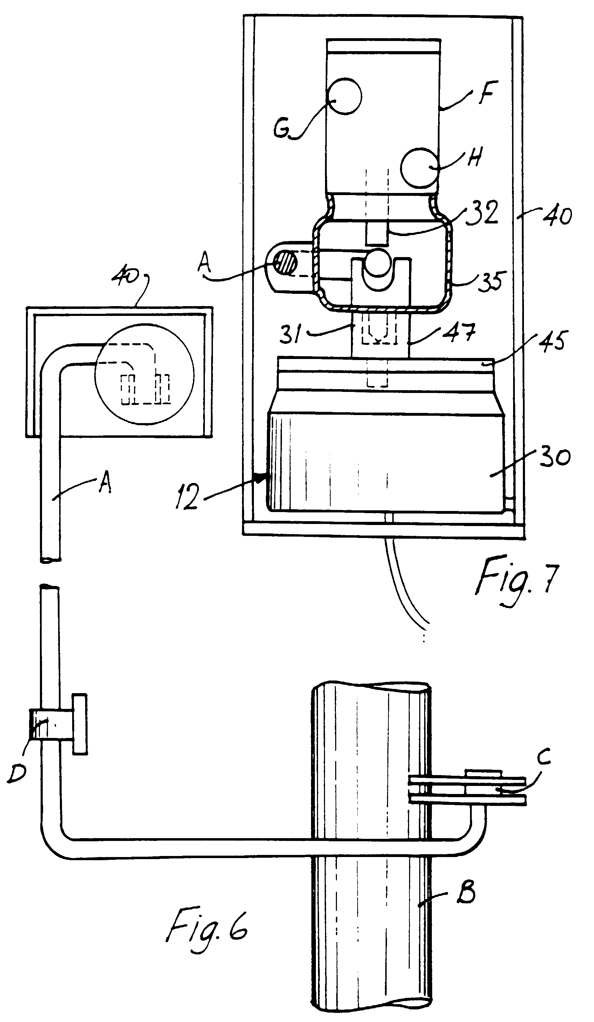

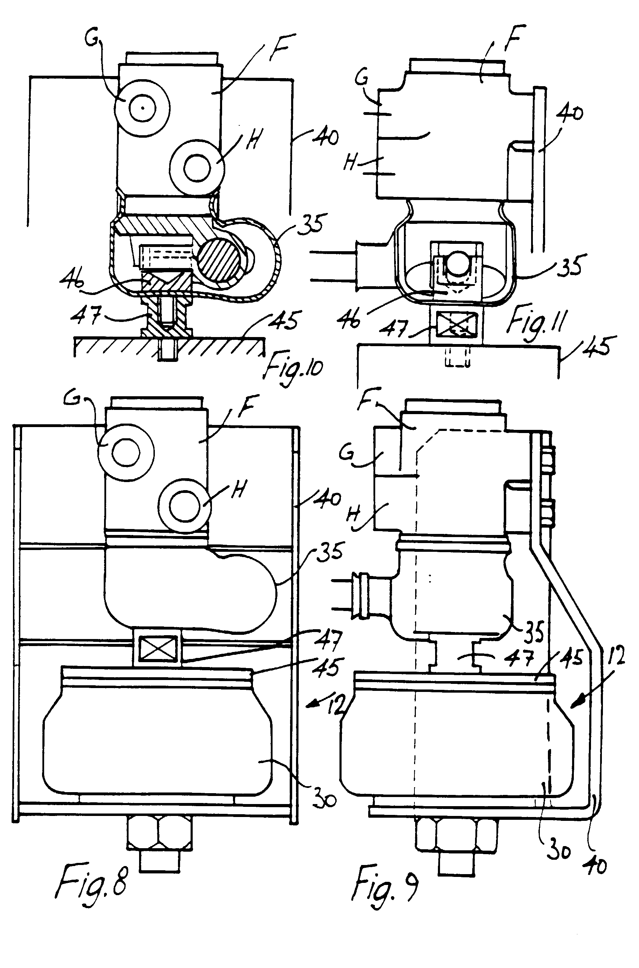

Referring particularly to Figs. 4 to 11, the compensating means 12 in this case comprises a pneumatic actuator in the form of an auxiliary compensating bellows 30 having an actuating arm 31 engageable with an actuating stem 32 of the load compensating valve F. The actuating arm 31 of the auxiliary bellows 30 is arranged coaxially with the actuating stem 32 of the load compensating valve F and a shielding boot 35 is provided over the connection between the auxiliary bellows 30 and the load compensating valve F. It is important to protect the lower end of the load compensating valve F inside a moulded rubber boot 35 to prevent road dirt from reaching the valve F.

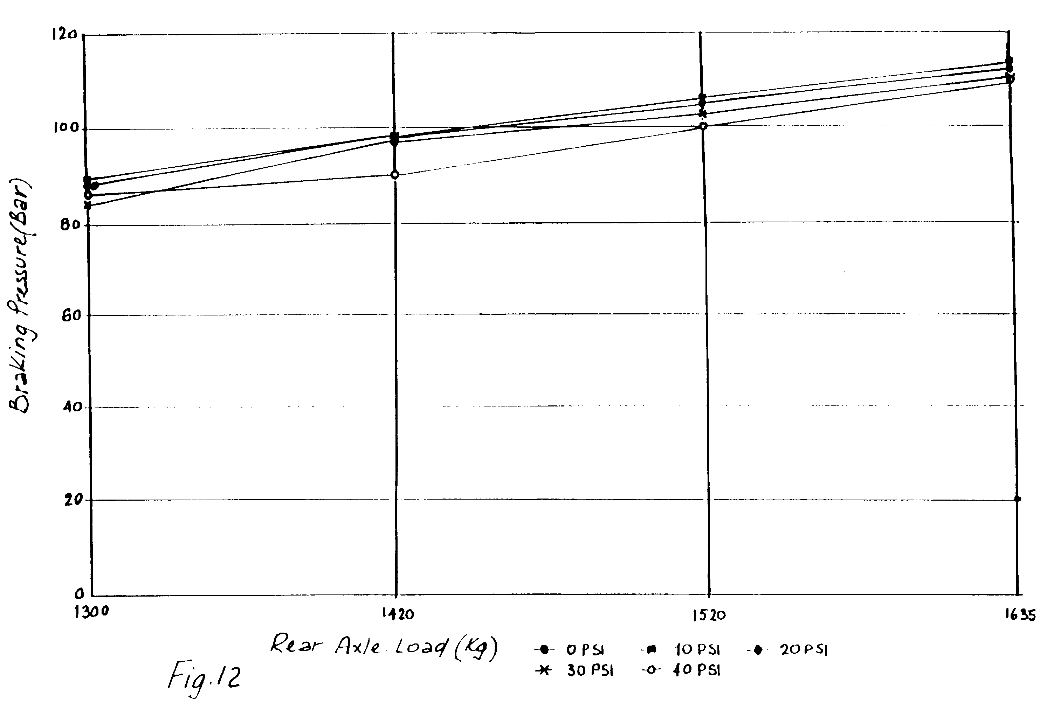

In more detail the connection between the actuating arm 31 and valve stem 32 comprises a plunger 46 and a spacer 47 (see particularly Fig. 10). The spacer 47 screws into a top plate 45 of the air bag 30 and an 8 mm hole is drilled into the rubber boot 35 to allow the plunger 46 to pass through the spacer 47. The plunger 46 acts against the stem 32 of the load sensing valve F.

The auxiliary air bellows 30 in this case is a compact short stroke air bag such as a FIRESTONE IMIA air bag.

The auxiliary bellows 30 is supported on a bracket 40 having mounting holes 41 which are used to attach the load sensing valve F to the bracket 40 and to the chassis of the vehicle as illustrated in Fig. 4.

There are many advantages of this arrangement, for example, because the auxiliary bellows 30 is located directly below the valve F and the actuating arm 31 is arranged substantially coaxially with the stem 32 of the valve F the minimum space is required. Further, the maximum force may be applied by the auxiliary bellows 30 over the shortest distance. A neat, reliable and simply fitted and operated compensating unit is provided without interfering with the vehicle suspension system. The unit can be readily fitted by disconnecting the valve F from its mounting, fitting a bracket to the same mounting and connecting the auxiliary bellows 30 to the bracket.

To shield the connection between the air line L_{c} and the auxiliary bellows 30 the bracket 40 is preferably extended downwardly over this connection.

### Example 1

A pair of FIRESTONE type 224 pneumatic bellows were fitted as auxiliary suspension units to the rear axle of a Fiat Ducato commercial vehicle. A compensating means 12 was installed as described above to operate the load sensing valve F in response to operation of the auxiliary suspension bellows 10, 11. The breaking pressure supplied to the rear brakes was checked at various ladings and the following results were obtained at different inflation pressures in the auxiliary suspension bellows.

**TABLE 1:**

| Braking pressure (bar) with rear axle load (Kg) for Fiat Ducato. | | | | | |
|---|---|---|---|---|---|
| Auxiliary Bellows Inflation Pressures (psi) | 0 | 10 | 20 | 30 | 40 |
| Rear Axle Load (kg) | Breaking Pressure (Bar) | | | | |
| 1300 | 88 | 89 | 88 | 84 | 86 |
| 1420 | 98 | 98 | 98 | 97 | 90 |
| 1520 | 105 | 106 | 105 | 103 | 100 |
| 1635 | 112 | 114 | 112 | 111 | 110 |

These results are plotted in Fig. 12.

As the auxiliary suspension bellows inflation pressure increases from 0 (no bellows fitted) the response of the braking pressure closely matches that of the normal braking pressure with no auxiliary suspension bellows fitted. Thus, when the auxiliary suspension system incorporating a compensator as described above is used, the vehicle braking system operates correctly and safely to manufacturer's settings. Thus, there is no adverse effects on the braking system by installing the auxiliary air bag suspension system of the invention.

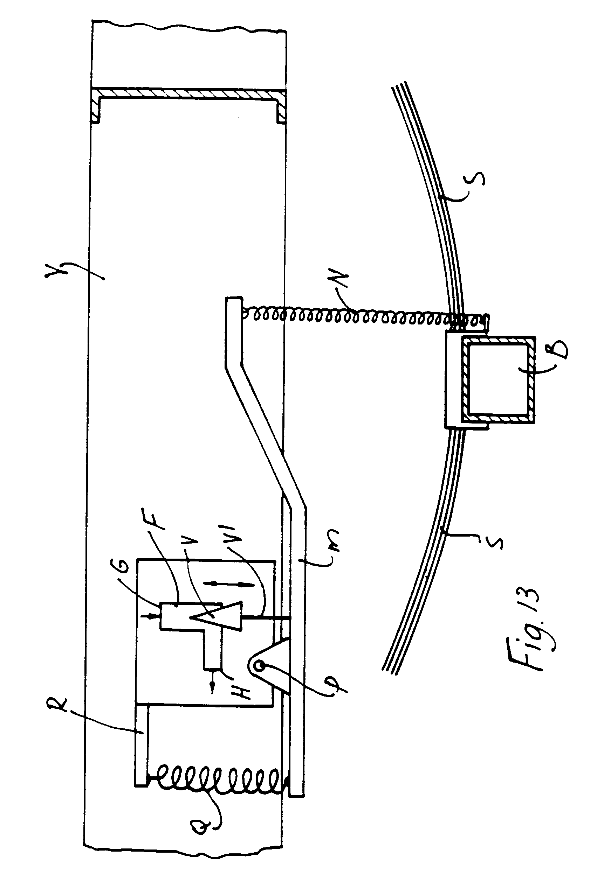

Referring to Fig. 13 there is illustrated another conventional suspension system between a chassis Y and an axle B, in this case of a Ford Transit F120 commercial vehicle. Parts similar to the arrangement of Fig. 3 above are assigned the same reference numerals. The suspension is a conventional leaf spring suspension S which extends between the axle B and chassis Y. A load sensing valve F is mounted on the chassis Y and includes a fluid inlet G, a fluid outlet H and a valve stem V which is diagrammatically illustrated. An arm M is pivotally mounted at P to the body of the valve F. An extension V¹ of the valve stem V engages the arm M as illustrated. A main setting coil spring N extends between one free end of the arm M and the axle B and a return spring Q extends between the other free end of the arm M and a fixed mounting R. In use, when the vehicle is fully laden the arm M is in the position illustrated in Fig. 13 with the valve stem V in a lowered position allowing free flow of braking fluid through the valve F. As the load is removed the chassis Y moves upwardly and the arm M pivots about the pivot P against the biassing of the spring N. This causes the valve stem V¹ to move upwardly to modulate the flow of fluid through the valve V.

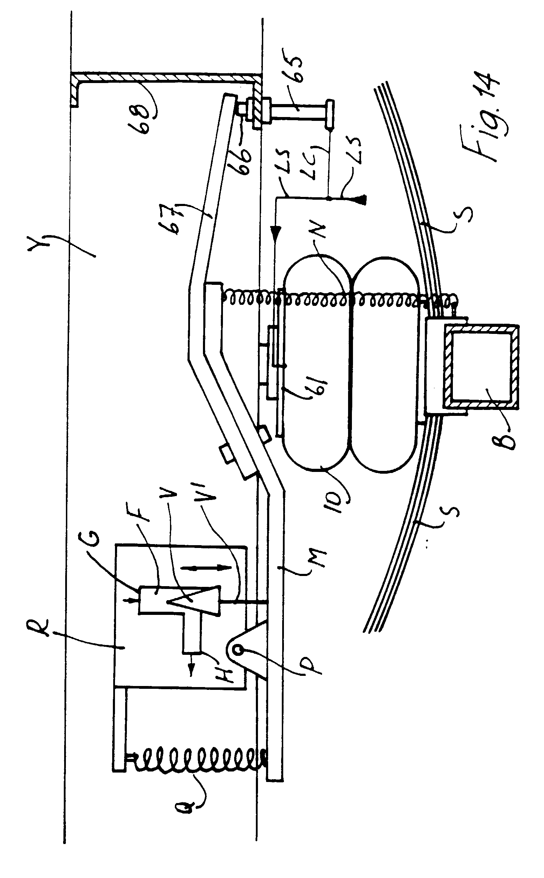

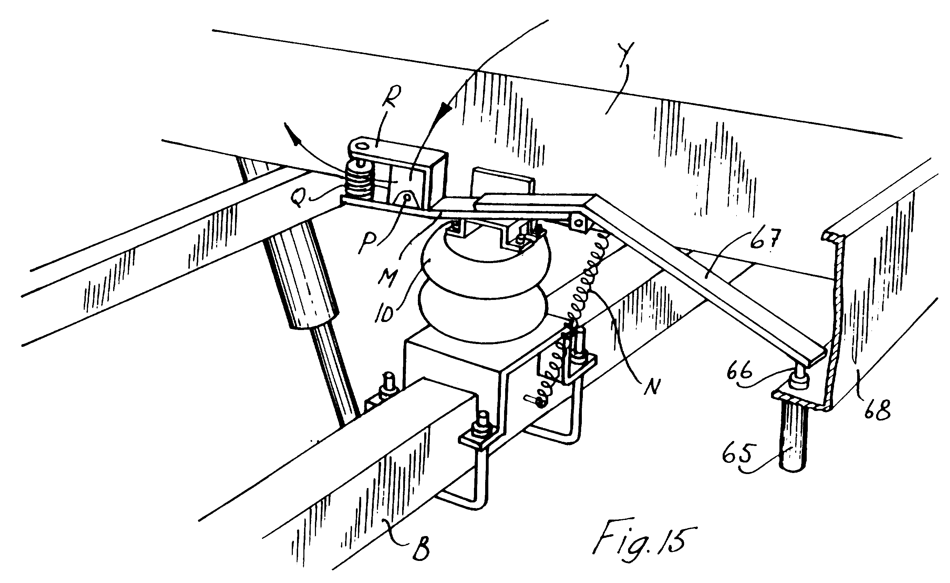

Referring to Figs. 14 and 15 there is illustrated an auxiliary suspension system according to the invention comprising an auxiliary air bellows 10 for the wheels on either side of the rear axle B. The bellows 10 is connected between the chassis and the axle B as illustrated. The air bellows 10 has an inlet connection 61 to which an air line Lₛ is connected for inflation of the bellows 10. Compensating means for modulating the operation of the load sensing valve F comprises a pneumatic cylinder 65 having a plunger 66 which is attached to an extension arm 67 bolted to the arm M for the stem V¹ of the load sensing valve F. The body of the cylinder 65 is fixed to a side rail 68 of the chassis Y as illustrated. The air supply L_{c} to the cylinder 65 is from a common supply which also provides air for the bellows 10 along the line Lₛ.

In use, as the bellows 10 is inflated to raise the chassis Y relative to the axle B air is also supplied to the cylinder 65 which lifts the plunger 66 and the extension arm 67. The extension arm 67 in turn lifts the arm M of the load sensing valve F causing the stem V¹ to rise and restrict the flow of fluid through the valve F. In this way the load sensing valve F operates correctly to modulate the braking pressure in accordance with load regardless of the presence of the bellows 10.

There are many advantages of this arrangement. For example, the extension arm 67 and ram 65 is a simple, neat and effective way of providing a compensating means for the valve F. The vehicle suspension system or valve F is not interfered with. It is only necessary to mount the ram 65 to the vehicle chassis and to provide an extension arm 67 connected to the valve operating arm M. Air supply to the ram 65 is by a common air supply to the auxiliary suspension bellows 10 so that the operation of the ram 65 mimics the operation of the bellows.

### Example 2

A pair of FIRESTONE type 224 pneumatic bellows were fitted as auxiliary suspension units to the rear axle of a Ford F120 Transit commercial vehicle. A compensating means 12 was installed as described above with reference to Figs. 14 and 15 to operate the load sensing valve in response to operation of the auxiliary suspension bellows 10. The breaking pressure supplied to the rear brakes was checked at various ladings and the following results were obtained at different inflation pressures in the auxiliary suspension bellows.

**TABLE 2:**

| Braking pressure (bar) with rear axle load (kg) for Ford F120 Transit. | | | | | |
|---|---|---|---|---|---|
| Auxiliary Bellows Inflation Pressure (psi) | 0 | 10 | 20 | 30 | 40 |
| Rear Axle Load (Kg) | Braking Pressure (Bar) | | | | |
| 1645 | 128 | 132 | 128 | 128 | 126 |
| 1550 | 120 | 130 | 128 | 122 | 118 |
| 1415 | 124 | 122 | 120 | 118 | 116 |
| 1305 | 118 | 118 | 116 | 112 | 110 |
| 1170 | 112 | 108 | 104 | 98 | 96 |
| 1045 | 94 | 90 | 92 | 92 | 90 |
| 925 | 85 | 84 | 82 | 80 | 80 |
| 790 | 72 | 74 | 75 | 72 | 70 |
| 640 | 66 | 64 | 64 | 62 | 66 |
| 495 | 50 | 52 | 50 | 52 | 52 |

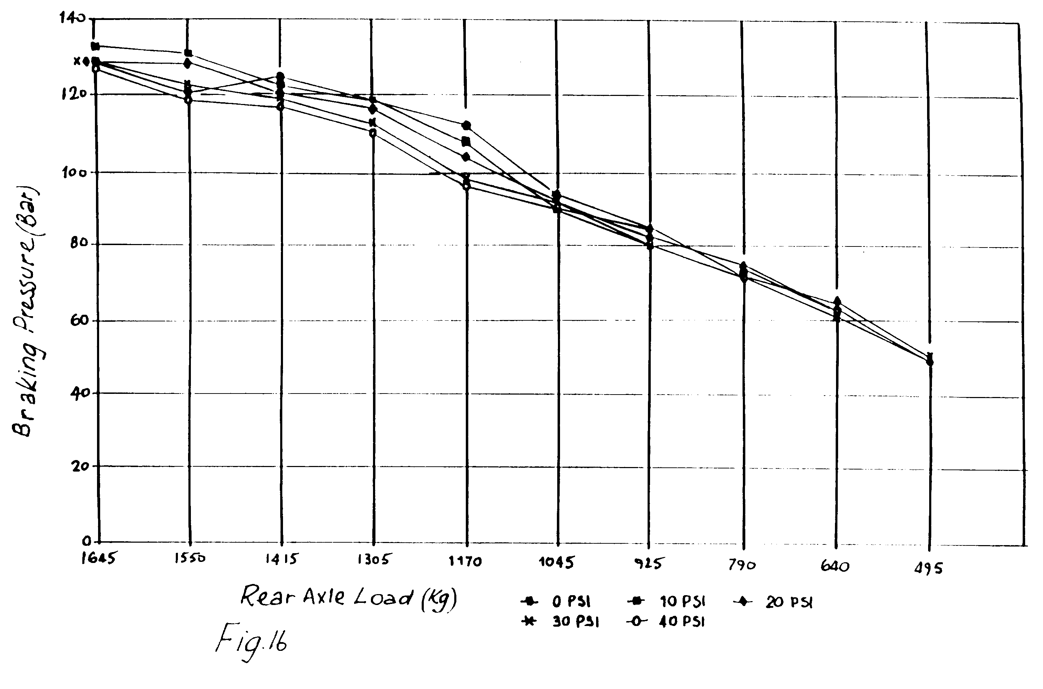

These results are plotted in Fig. 16.

## Claims

1. A vehicle having an in situ suspension system of the type comprising:
a suspension unit (S) for each wheel at least on the rear axle of the vehicle;
the vehicle having an hydraulically operated braking system;
a load compensating valve means (F) for controlling the flow of braking fluid and hence the braking force applied in accordance with load; and
a load sensing and modulating means (A,C) on the axle (B) having a load sensor mechanically operated means between the load sensing and modulating means and the load compensating valve means (F) to operate the valve,
and an auxiliary suspension unit comprising a prepressurised pneumatically operated bellows suspension unit (10,11) for at least the rear axle (B) of the vehicle characterised in that there is provided:
a pneumatic actuator (12,30,65) pneumatically connected to the auxiliary suspension units (10,11) to form a closed system therewith always having the same air pressure; and
a mechanical connection means (31) mounted between the pneumatic actuator (12,30,65) and the load sensor mechanical operating means to act against the sensor mechanical operating means to nullify the action of the auxiliary suspension unit in reducing the sensed load by the load sensing and modulating means, the actuator comprising an auxiliary bellows (30) having an actuating arm (31) forming said mechanical connection means and being engageable with an actuating stem (32) of the load compensating valve means (F), the actuating arm (31) of the auxiliary bellows (30) being arranged substantially co-axially with the actuating stem (32) of the load compensating valve (F).

2. A vehicle as claimed in claim 1 or 3 wherein a shielding boot (35) is provided over the connection between the auxiliary bellows (30) and the load compensating valve (F).

3. A vehicle as claimed in claim 1 or 2 wherein the auxiliary bellows (30) is supported on a bracket (40) which in turn supports the load sensing valve (F).

4. A vehicle having an in situ suspension system of the type comprising:
a suspension unit (S) for each wheel at least on the rear axle of the vehicle;
the vehicle having an hydraulically operated braking system;
a load compensating valve means (F) for controlling the flow of braking fluid and hence the braking force applied in accordance with load; and
a load sensing and modulating means (A,C) on the axle (B) having a load sensor mechanically operated means between the load sensing and modulating means and the load compensating valve means (F) to operate the valve,
and an auxiliary suspension unit comprising a prepressurised pneumatically operated bellows suspension unit (10,11) for at least the rear axle (B) of the vehicle characterised in that there is provided:
a pneumatic actuator (12,30,65) pneumatically connected to the auxiliary suspension units (10,11) to form a closed system therewith always having the same air pressure; and
a mechanical connection means (31) mounted between the pneumatic actuator (12,30,65) and the load sensor mechanical operating means to act against the sensor mechanical operating means to nullify the action of the auxiliary suspension unit in reducing the sensed load by the load sensing and modulating means, wherein the actuator comprises an actuating ram (65) which acts on the load sensing valve means (F), the actuating ram (65) including a plunger (66) which moves an arm (m) associated with the load sensing valve means (F), an extension arm (67) being interposed between the load sensing valve arm (m) and the plunger (66) of the actuating ram (65), and the actuating ram (65) being mounted to the vehicle chassis (Y).

## Patentansprüche

1. Fahrzeug mit einem Ortsaufhängungssystem des Typs, der aufweist:
eine Aufhängeeinheit (S) für jedes Rad wenigstens an der Hinterachse des Fahrzeugs;
wobei das Fahrzeug ein hydraulisch betriebenes Bremssystem aufweist;
ein Belastungsausgleichsventilmittel (F) zum Steuern des Flusses von Bremsflüssigkeit und folglich der in Übereinstimmung mit Belastungen angewendeten Bremskraft; und
ein Mittel (A,C) zum Erfassen und Modulieren von Belastungen auf der Achse (B), die ein mechanisch betriebenes Belastungssensormittel zwischen dem Mittel zum Erfassen und Modulieren von Belastungen und dem Belastungsausgleichsventilmittel (F) zum Betätigen des Ventils aufweist,
und eine Hilfsaufhängeeinheit, die eine bereits unter Druck stehende, pneumatisch betriebene Federbalg-Aufhängeeinheit (10,11) wenigstens für die Hinterachse (B) des Fahrzeugs aufweist, dadurch gekennzeichnet, daß vorgesehen ist:
eine pneumatische Betätigungseinrichtung (12,30,65), die pneumatisch mit den Hilfsaufhängeeinheiten (10,11) verbunden ist, um ein geschlossenes System zu bilden, mit dem immer der gleiche Luftdruck gewährleistet wird; und
ein mechanisches Verbindungsmittel (31), das zwischen der pneumatischen Betätigungseinrichtung (12,30,65) und dem mechanisch arbeitenden Belastungssensormittel angebracht ist, um gegen das mechanisch arbeitende Sensormittel zu wirken, um die Tätigkeit der Hilfsaufhängeeinheit durch Verringern der erfaßten Belastung durch das Mittel zum Erfassen und Modulieren von Belastungen aufzuheben, wobei die Betätigungseinrichtung einen Hilfsfederbalg (30) mit einem Betätigungsarm (31) aufweist, der das mechanische Verbindungsmittel bildet und mit einem Betätigungsschaft (32) des Belastungsausgleichsventilmittels (F) in Eingriff bringbar ist, wobei der Betätigungsarm (31) des Hilfsfederbalgs (30) im wesentlichen koaxial mit dem Betätigungsschaft (32) des Belastungsausgleichsventils (F) angeordnet ist.

2. Fahrzeug nach Anspruch 1 oder 3, in dem eine Schutzkappe (35) über der Verbindung zwischen dem Hilfsfederbalg (30) und dem Belastungsausgleichsventil (F) vorgesehen ist.

3. Fahrzeug nach Anspruch 1 oder 2, in dem der Hilfsfederbalg (30) auf einer Klammer (40) gehalten wird, die wiederum das Belastungssensorventil (F) hält.

4. Fahrzeug mit einem Ortsaufhängungssystem des Typs, der aufweist:
eine Aufhängeeinheit (S) für jedes Rad wenigstens an der Hinterachse des Fahrzeugs;
wobei das Fahrzeug ein hydraulisch betriebenes Bremssystem aufweist;
ein Belastungsausgleichsventilmittel (F) zum Steuern des Flusses von Bremsflüssigkeit und folglich der in Übereinstimmung mit Belastungen angewendeten Bremskraft; und
ein Mittel (A,C) zum Erfassen und Modulieren von Belastungen auf der Achse (B), die ein mechanisch betriebenes Belastungssensormittel zwischen dem Mittel zum Erfassen und Modulieren von Belastungen und dem Belastungsausgleichsventilmittel (F) zum Betätigen des Ventils aufweist,
und eine Hilfsaufhängeeinheit, die eine bereits unter Druck stehende pneumatisch betriebene Federbalgaufhängeeinheit (10,11) wenigstens für die Hinterachse (B) des Fahrzeugs aufweist, dadurch gekennzeichnet, daß vorgesehen ist:
eine pneumatische Betätigungseinrichtung (12,30,65), die pneumatisch mit den Hilfsaufhängeeinheiten (10,11) verbunden ist, um ein geschlossenes System zu bilden, mit dem immer der gleiche Luftdruck gewährleistet wird; und
ein mechanisches Verbindungsmittel (31), das zwischen der pneumatischen Betätigungseinrichtung (12,30,65) und dem mechanisch arbeitenden Belastungssensormittel angebracht ist, um gegen das mechanisch arbeitende Sensormittel zu wirken, um die Tätigkeit der Hilfsaufhängeeinheit durch Verringern der erfaßten Belastung durch das Mittel zum Erfassen und Modulieren von Belastungen aufzuheben, wobei die Betätigungseinrichtung einen Betätigungstößel (65) aufweist, der auf das Belastungssensorventilmittel (F) einwirkt, wobei der Betätigungsstoßel (65) eine Stößelstange (66) einschließt, die einen mit dem Belastungssensorventilmittel (F) verknüpften Arm (m) bewegt, wobei ein Verlängerungsarm (67) zwischen dem Arm (m) des Belastungssensorventils und der Stößelstange (66) des Betätigungsstößels (65) eingefügt ist und der Betätigungsstößel (65) an dem Fahrgestell (Y) des Fahrzeugs angebracht ist.

## Revendications

1. Véhicule ayant un système de suspension in situ du type comprenant :
une unité de suspension (S) pour chaque roue au moins sur l'essieu arrière du véhicule ;
le véhicule ayant un système de freinage à actionnement hydraulique ;
des moyens de clapet de compensation de charge (F) destinés à commander l'écoulement de liquide de freinage et par conséquent la force de freinage appliquée en fonction de la charge ; et
des moyens de détection et de modulation de charge (A, C) sur l'essieu (B) ayant des moyens de détection de charge à actionnement mécanique entre les moyens de détection et de modulation de charge et les moyens de clapet de compensation de charge (F) pour actionner le clapet,
et une unité de suspension auxiliaire comprenant une unité de suspension à soufflet à actionnement pneumatique à pressurisation préalable (10, 11) au moins pour l'essieu arrière (B) du véhicule, caractérisé en ce qu'il est prévu :
un actuateur pneumatique (12, 30, 65) pneumatiquement connecté aux unités de suspension auxiliaires (10, 11) afin de former avec celles-ci un système fermé ayant toujours la même pression d'air ; et
des moyens de connexion mécaniques (31) montés entre l'actuateur pneumatique (12, 30, 65) et les moyens de détection de charge à actionnement mécanique destinés à agir contre les moyens de détection à actionnement mécanique pour annuler l'action de l'unité de suspension auxiliaire en réduisant la charge détectée par les moyens de détection et de modulation de charge, l'actuateur comprenant un soufflet auxiliaire (30) ayant un bras d'actionnement (31) formant lesdits moyens de connexion mécaniques et pouvant se mettre en prise avec une tige d'actionnement (32) des moyens de clapet de compensation de charge (F), le bras d'actionnement (31) du soufflet auxiliaire (30) étant agencé de manière sensiblement coaxiale avec la tige d'actionnement (32) du clapet de compensation de charge (F).

2. Véhicule selon la revendication 1 ou 3, dans lequel un sabot de protection (35) est prévu sur la connexion entre le soufflet auxiliaire (30) et le clapet de compensation de charge (F).

3. Véhicule selon la revendication 1 ou 2, dans lequel le soufflet auxiliaire (30) est supporté sur un étrier (40) qui lui-même supporte le clapet de détection de charge (F).

4. Véhicule ayant un système de suspension in situ du type comprenant :
une unité de suspension (S) pour chaque roue au moins sur l'essieu arrière du véhicule ;
le véhicule ayant un système de freinage à actionnement hydraulique ;
des moyens de clapet de compensation de charge (F) destinés à commander l'écoulement de liquide de freinage et par conséquent la force de freinage appliquée en fonction de la charge ; et
des moyens de détection et de modulation de charge (A, C) sur l'essieu (B) ayant des moyens de détection de charge à actionnement mécanique entre les moyens de détection et de modulation de charge et les moyens de clapet de compensation de charge (F) destinés à actionner le clapet,
et une unité de suspension auxiliaire comprenant une unité de suspension à soufflet à actionnement pneumatique à pressurisation préalable (10, 11) au moins pour l'essieu arrière (B) du véhicule, caractérisé en ce qu'il est prévu :
un actuateur pneumatique (12, 30, 65) pneumatiquement connecté aux unités de suspension auxiliaires (10, 11) afin de former avec celles-ci un système fermé ayant toujours la même pression d'air ; et
des moyens de connexion mécaniques (31) montés entre l'actuateur pneumatique (12, 30, 65) et les moyens de détection de charge à actionnement mécanique destinés à agir contre les moyens de détection à actionnement mécanique pour annuler l'action de l'unité de suspension auxiliaire en réduisant la charge détectée par les moyens de détection et de modulation de charge, dans lequel l'actuateur comprend un pilon d'actionnement (65) qui agit sur les moyens de clapet de détection de charge (F), le pilon d'actionnement (65) comprenant un piston (66) qui déplace un bras (m) associé aux moyens de clapet de détection de charge (F), un bras en extension (67) étant intercalé entre le bras de clapet de détection de charge (m) et le piston (66) du pilon d'actionnement (65), et le pilon d'actionnement (65) étant monté sur le châssis du véhicule (Y).
